# FASCICULE DE BREVET EUROPEEN

(11) **EP 2 257 932 B1**
(45) Date de publication et mention de la délivrance du brevet: **13.11.2013**
(21) Numéro de dépôt: 09724175.6
(22) Date de dépôt: 24.03.2009
(51) Int. Cl.: G06T 5/00, G06T 17/00, G06T 7/00, G01B 11/25, G01B 17/06, G06K 9/54

(54) **PROCEDE DE RECONSTRUCTION SYNTHETIQUE TRIDIMENSIONNELLE D'OBJETS EXPOSES A UNE ONDE ELECTROMAGNETIQUE ET/OU ELASTIQUE**
VERFAHREN ZUR SYNTHETISCHEN 3D-REKONSTRUKTION VON UNTER DEM EINFLUSS ELEKTROMAGNETISCHER UND/ODER ELASTISCHER WELLEN STEHENDEN OBJEKTEN
METHOD FOR THE THREE-DIMENSIONAL SYNTHETIC RECONSTRUCTION OF OBJECTS EXPOSED TO AN ELECTROMAGNETIC AND/OR ELASTIC WAVE

(30) Priorité: 25.03.2008 FR 0801591
(43) Date de publication de la demande: 08.12.2010
(73) Titulaire: THALES, 92200 Neuilly-sur-Seine (FR); Sispia, 94300 Vincennes (FR)
(72) Inventeur: BERGINC, Gérard, F-94320 Thiais (FR); BERECHET, Ion, F-94300 Vincennes (FR); BERECHET, Stefan, F-94120 Fontenay-sous-Bois (FR)
(74) Mandataire: Henriot, Marie-Pierre
(86) Numéro de dépôt international: PCT/EP2009/053447
(87) Numéro de publication internationale: WO 2009/118314

(56) Documents cités:
- EP-A- 1 486 920
- EP-A- 1 862 969
- US-A1- 2002 106 135
- US-A1- 2003 117 402

## Description

Le domaine de l'invention est celui de la reconstruction synthétique tridimensionnelle d'objets exposés à une onde électromagnétique et/ou élastique. Elle est obtenue à partir de signaux captés issus de cette exposition. L'invention s'applique plus particulièrement à la reconstruction d'objets à partir de signaux faibles fortement bruités.

A titre d'exemple non limitatif, les signaux faibles (« Weak Signals » en anglais) sont des signaux pour lesquels :
- le rapport signal/bruit est faible et/ou
- l'amplitude ou l'intensité est faible et/ou
- les informations contenues sont fragmentaires et/ou
- les informations contenues sont constituées de micro-événements en coïncidence ou en occurrence.

Ce procédé est destiné à aider les acteurs du monde industriel et médical, de la sécurité et de la défense, à maîtriser les processus d'identification d'une manière fiable pour le management des performances et des risques.

Reconstruire synthétiquement un objet illuminé par un laser dans un large domaine des longueurs d'ondes est un problème qui couvre un large spectre d'applications théoriques et industrielles dans : le domaine sécuritaire et de la défense (par exemple l'identification d'un IED acronyme de l'expression anglo-saxonne « Improvised Explosive Device ») ou le domaine civil des transports (par exemple l'identification d'un piéton ou d'un véhicule dans le domaine de la sécurisation des transports) ou le domaine médical (par exemple l'identification tomographique des cellules cancéreuses dans un tissu).

Quelle que soit la robustesse des systèmes de détection employés, les informations fournies dans ces milieux fortement bruités nécessitent des procédés de traitement de données et de connaissances innovants permettant de localiser, de reconstruire synthétiquement l'objet sans perte de résolution spatiale et de l'identifier de manière fiable.

De nombreux travaux scientifiques, techniques et industriels ont été réalisés dans le domaine des problèmes d'inversion ; les résultats obtenus restent insatisfaisants à cause de leur forte sensibilité aux variations des paramètres de mesure issus de signaux faibles, de l'environnement et de l'instabilité du système en sa globalité. La réalisation de procédés de traitement d'inversion et de reconstruction fiables permettant une résolution compatible des systèmes utilisés reste un problème majeur pour les industriels.

A titre d'exemple non limitatif, les difficultés rencontrées dans les procédés classiques de reconstruction tridimensionnelle à partir d'objets illuminés par une onde électromagnétique ou excités par une onde élastique ont comme sources :
- le bruit de propagation,
- la non stabilité du capteur par rapport aux objets,
- le bruit du capteur et de l'électronique associée,
- la haute résolution spatiale et temporelle imposées,
- la structure du bruit d'ensemble non connue,
- le besoin de corréler en temps réel,
- l'évolution en temps réel de l'information,
- le problème non linéaire lié à l'inversion,
- la forte non linéarité du comportement du signal.

Le but de l'invention est de pallier ces inconvénients.

Plus précisément l'invention a pour objet un procédé de reconstruction synthétique d'un objet exposé à une onde, à partir de signaux captés issus de cette exposition et d'une base de connaissances. Il est principalement caractérisé en ce que la base de connaissances comprend des critères de filtrage à savoir des critères de recherche en mode direct, des critères d'extraction de signaux faibles, des critères d'identification en mode direct, des grilles d'observation tridimensionnelle liées à l'angle d'illumination ou de réception de l'onde, des critères de grilles d'observation tridimensionnelle, des critères de reconstruction tridimensionnelle, des règles d'optimisation associées auxdits critères, et des critères optimums correspondants c'est-à-dire respectant lesdites règles d'optimisation, et en ce que le procédé comporte les étapes suivantes consistant à :
❖ extraire de la base de connaissances, des critères de recherche en mode direct,
❖ extraire de la base de connaissances, des critères d'extraction des signaux faibles,
❖ extraire de la base de connaissances, des critères d'identification en mode direct et la règle associée,
❖ extraire de la base de connaissances, des grilles d'observation tridimensionnelle et la règle associée,
❖ extraire de la base de connaissances, des critères de grilles d'observation tridimensionnelle et la règle associée,
❖ extraire de la base de connaissances, des critères de reconstruction tridimensionnelle et la règle associée,
❖ extraire à partir d'un ensemble de signaux filtré à travers les critères de recherche en mode direct extraits, des signaux faibles,
❖ extraire à partir des signaux faibles filtrés à travers les critères d'extraction des signaux faibles extraits, des signaux faibles à intérêt,
❖ débruiter les signaux faibles à intérêt de manière à obtenir des signaux faibles utiles,
❖ si la règle d'optimisation des critères d'identification en mode direct, issue de la base de connaissances, est satisfaite par les signaux faibles utiles, alors :
   i. ces critères d'extraction en mode direct extraits sont des critères d'extraction en mode direct optimums,
   ii. mettre à jour la base de connaissance avec ces critères d'extraction en mode direct optimums,
   iii. les critères de recherche en mode direct extraits sont des critères de recherche en mode direct optimums,
   iv. mettre à jour la base de connaissance avec lesdits critères de recherche en mode direct optimums,
   v. identifier une information directe utile, à partir des signaux faibles utiles filtrés à travers les critères d'identification en mode direct,
   sinon changer ces critères d'extraction en mode direct dans la base de connaissance et réitérer les étapes d'extraction de ces critères, des signaux faibles à intérêt, des signaux faibles utiles, l'étape d'identification d'une information directe utile et l'étape concernant la règle d'optimisation des nouveaux critères d'extraction des signaux faibles, et
   si la règle d'optimisation des critères d'identification en mode direct n'est pas satisfaite par les signaux faibles utiles, alors changer ces critères de recherche en mode direct dans la base de connaissances et réitérer les étapes d'extraction de ces critères, des signaux faibles, des signaux faibles à intérêt, des signaux faibles utiles, l'étape d'identification d'une information directe utile et l'étape concernant la règle d'optimisation des nouveaux critères d'extraction,
❖ si la règle d'optimisation des grilles d'observation tridimensionnelle est satisfaite par l'information directe utile, alors :
   i. ces grilles d'observation tridimensionnelle extraites sont des grilles d'observation tridimensionnelle optimums,
   ii. mettre à jour dans la base de connaissances, les grilles d'observation tridimensionnelle avec ces grilles d'observation tridimensionnelle optimums,
   iii. reconstruire à partir de l'information directe utile filtrée à travers les grilles d'observation tridimensionnelle extraites, une information tridimensionnelle à intérêt,
   sinon changer ces grilles d'observation tridimensionnelle dans la base de connaissances, et réitérer l'étape d'extraction de grilles et l'étape concernant la règle d'optimisation de ces nouvelles grilles,
❖ si la règle d'optimisation des critères de grilles d'observation tridimensionnelle est satisfaite par l'information tridimensionnelle à intérêt, alors :
   i. ces critères de grilles d'observation tridimensionnelle extraits sont des critères de grilles d'observation tridimensionnelle optimums,
   ii. mettre à jour dans la base de connaissances, les critères de grilles d'observation tridimensionnelle avec ces critères de grilles d'observation tridimensionnelle optimums,
   iii. reconstruire à partir de l'information tridimensionnelle à intérêt, filtrée à travers les critères de grilles tridimensionnelle extraits, une information tridimensionnelle utile,
   sinon changer ces critères de grilles d'observation tridimensionnelle dans la base de connaissances, et réitérer l'étape d'extraction de ces critères de grilles et l'étape concernant la règle d'optimisation de ces nouveaux critères,
❖ si la règle d'optimisation des critères de reconstruction tridimensionnelle est satisfaite par l'information tridimensionnelle utile, alors :
   i. ces critères de reconstruction tridimensionnelle extraits sont des critères de reconstruction tridimensionnelle optimums,
   ii. mettre à jour dans la base de connaissance, les critères de reconstruction tridimensionnelle avec ces critères de reconstruction tridimensionnelle optimums,
   iii. reconstruire à partir de l'information tridimensionnelle utile, filtrée à travers les critères de reconstruction tridimensionnelle extraits, une information tridimensionnelle de l'objet et déterminer une fiche d'état de reconnaissance,
   sinon changer ces critères de reconstruction tridimensionnelle dans la base de connaissances et réitérer l'étape d'extraction de ces critères de reconstruction et l'étape concernant la règle d'optimisation de ces nouveaux critères de reconstruction.

De préférence, le procédé comprend en outre une étape d'amplification des signaux débruités.

D'autres caractéristiques et avantages de l'invention apparaîtront à la lecture de la description détaillée qui suit, faite à titre d'exemple non limitatif et en référence aux dessins annexés dans lesquels :
- la figure 1 représente schématiquement le procédé selon l'invention,
- la figure 2 est un organigramme relatif à l'optimisation des critères.

D'une figure à l'autre, les mêmes éléments sont repérés par les mêmes références.

Le procédé selon l'invention s'applique à la reconstruction synthétique tridimensionnelle d'objets exposés à une onde électromagnétique telle que l'onde électromagnétique générée par un laser dans le domaine des longueurs d'ondes allant du visible à l'infrarouge et/ou générée par des micro-ondes allant du domaine sub-millimétrique jusqu'au domaine métrique. Les objets peuvent aussi être exposés à une onde élastique telle qu'une onde du domaine des infrasons, sons, ultrasons.

Le procédé s'appuie sur une base de connaissances et de données de référence, désignée par la suite base de connaissances (1) qui comporte des données issues de mesures physiques et/ou de résultats de modèles physiques et/ou de connaissances métier et/ou de connaissances empiriques de l'expert métier. Plus précisément elle comprend :
- des critères de recherche en mode direct (2),
- des critères d'extraction de signaux faibles (3),
- des critères d'identification en mode direct (4),
- des grilles d'observation tridimensionnelle (5),
- des critères de grilles d'observation tridimensionnelle (6),
- des critères de reconstruction tridimensionnelle (7),
- des règles d'optimisation associées auxdits critères (4), (5), (6), (7),
- ainsi que des critères et grilles optimums (2'), (3'), (5'), (6'), (7') correspondants.

Ces critères sont des critères de filtrage de signaux ou d'information.

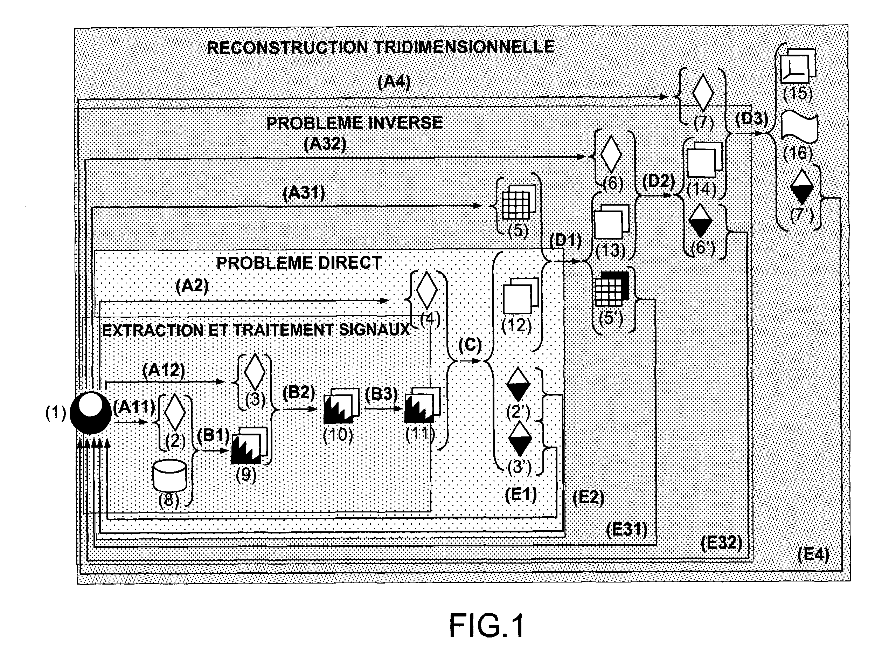

A titre d'exemple non limitatif, les critères de recherches en mode direct 2 sont des critères issus de corrélations d'amplitudes et/ou de corrélations d'intensité diffusée et/ou de séquences temporelles et/ou de densités de probabilité et/ou de signatures spectrales et/ou de corrélations temporelles. La recherche en mode direct est une extraction d'une information énergétique utile à partir des signaux captés issus de l'exposition de l'objet à une onde, pour obtenir des signaux faibles, comme indiqué plus loin en relation avec la figure 1. Il s'agit typiquement d'un filtrage de signaux faibles. Les critères de recherche en mode direct sont alors des critères d'extraction des signaux captés c'est-à-dire des critères de filtrage des signaux captés, pour sélectionner des signaux faibles.

A titre d'exemple non limitatif, les critères d'extraction des signaux faibles (3) sont des critères issus du seuil et/ou de la plage et/ou du domaine d'évaluation du critère de recherche en mode direct.

A titre d'exemple non limitatif, les critères d'identification en mode direct (4) sont des critères issus de l'appartenance de l'objet à une ou plusieurs classes prédéfinies.

A titre d'exemple non limitatif, les grilles d'observation tridimensionnelle (5) sont des grilles (au sens « grilles de lecture ») liées à l'angle du faisceau laser d'illumination et/ou à l'angle du faisceau laser de réception ou à l'angle du faisceau ultrasonore d'excitation et/ou à l'angle de réception ultrasonore. Il s'agit donc de grilles liées à l'angle d'illumination ou de réception du faisceau de l'onde.

A titre d'exemple non limitatif, les critères de grilles d'observation tridimensionnelle (6) sont des valeurs de l'angle laser d'illumination et/ou de l'angle laser de réception et/ou du pas de l'angle laser d'illumination et/ou du pas de l'angle laser de réception ou des valeurs de l'angle d'excitation ultrasonore et/ou de l'angle de réception ultrasonore et/ou du pas de l'angle d'excitation ultrasonore et/ou du pas de l'angle de réception ultrasonore. Ces critères sont donc des valeurs liées à l'angle d'illumination ou de réception du faisceau de l'onde.

A titre d'exemple non limitatif, les critères de reconstruction tridimensionnelle (7) sont des paramètres de forme et/ou de la typologie de facettes et/ou du nombre de facettes et/ou de la taille de facette de l'objet et/ou du comportement de l'objet fournis par la base de connaissances (1). Ce sont donc des critères liés à la forme ou à la représentation de l'objet.

A titre d'exemple non limitatif les règles d'optimisation sont de type recherche de la valeur maxi d'un paramètre, d'un comparatif de seuil, d'un nombre des coïncidences, d'une fenêtre temporelle, d'une signature spectrale, d'une tache temps-fréquence...

Des exemples de critères optimums sont donnés plus loin.

Comme on peut le voir sur la figure 1, la reconstruction tridimensionnelle de l'objet selon l'invention est obtenue à partir d'une base de connaissances (1), à l'issue de quatre grandes étapes au cours desquelles la base de connaissances est mise à jour.

Ces étapes sont :
- extraction de signaux utiles à partir des signaux captés, notamment des signaux captés fortement bruités,
- identification en mode direct d'une information directe utile à partir des signaux utiles,
- reconstruction d'une information tridimensionnelle utile à intérêt par traitement inverse de l'information directe utile,
- reconstruction tridimensionnelle de l'objet à partir de l'information tridimensionnelle utile de l'objet.

On va à présent détailler ces grandes étapes.

On considère l'étape d'extraction (B1, B2, B3) de signaux faibles utiles (11) à partir d'une partie (dite un ensemble) des signaux captés (8) qui sont éventuellement fortement bruités. Elle est basée sur l'obtention de résultats intermédiaires : des signaux faibles (9) et des signaux faibles à intérêt (10).

Elle comprend plusieurs sous-étapes consistant à :
- extraire (A11) de la base de connaissances (1), des critères de recherche en mode direct 2 ;
- extraire (B1) à partir d'un ensemble de signaux captés (8) filtré à travers les critères de recherche en mode direct (2), des signaux dits signaux faibles (9);
- extraire (A12) de la base de connaissances (1), des critères d'extraction de signaux faibles (3);
- extraire (B2) à partir des signaux faibles (9) filtrés à travers les critères d'extraction des signaux faibles (3), des signaux dits signaux faibles à intérêt (10);
- débruiter et de préférence amplifier (B3) les signaux faibles à intérêt (10) pour obtenir des signaux dits signaux faibles utiles (11).

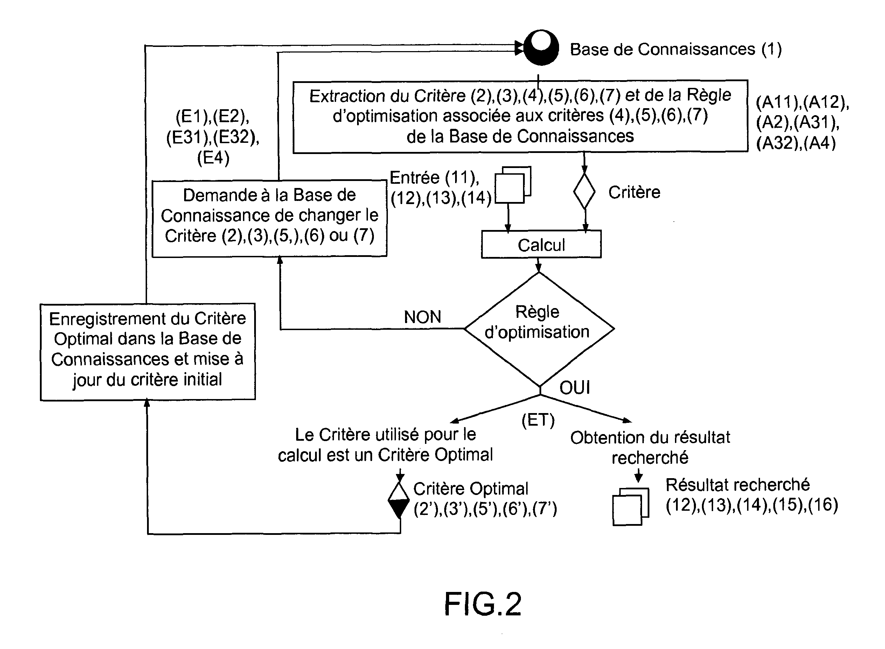

Les trois grandes étapes suivantes se déroulent selon quasiment le même schéma représenté sous forme d'un organigramme montré figure 2.

Un critère spécifique de l'étape et sa règle d'optimisation associée sont extraits de la base de connaissances (1). Des critères spécifiques optimums sont éventuellement déterminés comme on va le voir ; ces critères optimums sont obtenus à partir des critères spécifiques en intégrant pour chacun sa règle d'optimisation associée.

Si la règle d'optimisation des critères spécifiques appliquée aux données d'entrée, est satisfaite alors :
- les données d'entrée de l'étape sont filtrées au moyen de ces critères spécifiques et ce sont les données de sortie,
- ces critères spécifiques sont des critères spécifiques optimums,
- la base de connaissances (1) est mise à jour avec ces critères optimums, (cela revient à valider les critères spécifiques utilisés),
sinon changer ces critères spécifiques dans la base de connaissances (1) et réitérer les extractions des critères, de la règle d'optimisation associée et le filtrage avec ces nouveaux critères spécifiques.

On considère l'étape (C) d'identification en mode direct d'une information directe utile (12) à partir des signaux faibles utiles (11) obtenus à l'issue de l'étape précédente d'extraction. L'information directe utile (12) comprend typiquement un sous-ensemble de données du type énergie rétrodiffusée et/ou diffusée issus des signaux faibles utiles (11).

Elle comprend les sous étapes consistant à :
- extraire (A2) de la base de connaissances (1), les critères d'identification en mode direct (4) et la règle associée ;
si la règle d'optimisation des critères d'identification en mode direct 4 est satisfaite par les signaux faibles utiles (11), alors :
○ les critères d'extraction en mode direct extraits (3) sont des critères d'extraction en mode direct optimums (3'),
○ mettre à jour (E1) la base de connaissances (1) avec lesdits critères d'extraction en mode direct optimums (3'),
○ les critères de recherche en mode direct extraits (2) sont des critères de recherche en mode direct optimums (2'),
○ mettre à jour (E2) la base de connaissances (1) avec lesdits critères de recherche en mode direct optimums (2'),
○ identifier (C) une information directe utile (12), à partir des signaux faibles utiles (11) filtrés à travers les critères d'identification en mode direct (4),
sinon changer ces critères d'extraction des signaux faibles (3) et réitérer l'étape d'extraction (A12) de ces critères (3), les étapes (B2), (B3), et (C) et l'étape concernant la règle d'optimisation du critère (4), et
si la règle d'optimisation des critères d'identification en mode direct 4) n'est toujours pas satisfaite par les signaux faibles utiles (11), alors changer ces critères de recherche en mode direct (2) dans la base de connaissances (1) et réitérer l'étape d'extraction (A11) de ces critères (2), les étapes (B1), (B2), (B3), et (C) et l'étape concernant la règle d'optimisation du critère (2).

A titre d'exemple non limitatif, les critères de recherches en mode direct optimums (2') sont des critères optimums sur des corrélations d'amplitudes et/ou des corrélations d'intensité diffusée et/ou des séquences temporelles et/ou des densités de probabilité et/ou des signatures spectrales et/ou des corrélations temporelles, pour lesquels l'identification (C) est réalisée.

A titre d'exemple non limitatif, les critères d'extraction des signaux faibles optimums (3') sont des critères optimums issus du seuil et/ou de la plage et/ou du domaine d'évaluation du critère de recherches en mode direct, pour lesquels l'identification (C) est réalisée.

On considère l'étape de reconstruction (D1, D2) d'une information tridimensionnelle utile à intérêt (14) par traitement inverse de l'information directe utile (12). Elle est basée sur l'obtention de résultats intermédiaires : une information tridimensionnelle à intérêt (13). L'information tridimensionnelle à intérêt (13) constitue la reconstruction tridimensionnelle à partir de l'information directe utile. L'information tridimensionnelle utile (14) représente la reconstruction tridimensionnelle améliorée par l'élimination d'artéfacts.

Elle comprend les sous-étapes consistant à :
- extraire (A31), à partir de la base de connaissances (1), les grilles d'observation tridimensionnelle (5) et la règle d'optimisation associée ;
- si la règle d'optimisation des grilles d'observation tridimensionnelle (5), issue de la base de connaissances (1), est satisfaite par l'information directe utile (12), alors :
   ○ ces grilles d'observation tridimensionnelle (5) sont des grilles d'observation tridimensionnelle optimums (5'),
   ○ mettre à jour (E31) la base de connaissances (1) avec lesdites grilles d'observation tridimensionnelle optimums (5') ;
   ○ reconstruire (D1) à partir de l'information directe utile (12) filtrée à travers les grilles d'observation tridimensionnelle (5), une information tridimensionnelle à intérêt (13),
sinon changer ces grilles d'observation tridimensionnelle (5) dans la base de connaissances (1), et réitérer l'étape d'extraction (A31) de grilles et l'étape concernant la règle d'optimisation de ces nouvelles grilles (5) ;
- extraire (A32) à partir de la base de connaissances (1), les critères de grilles d'observation tridimensionnelle (6) et la règle d'optimisation associée,
- si la règle d'optimisation des critères de grilles d'observation tridimensionnelle (6) issue de la base de connaissances (1), est satisfaite par l'information tridimensionnelle à intérêt (13), alors :
   ○ ces critères de grilles d'observation tridimensionnelle (6) sont des critères de grilles d'observation tridimensionnelle optimums (6'),
   ○ mettre à jour (E32) la base de connaissances (1) avec lesdits critères de grilles d'observation tridimensionnelle optimums (6'),
   ○ reconstruire (D2), à partir de l'information tridimensionnelle à intérêt (13), filtrée à travers les critères de grilles tridimensionnelle (6), une information tridimensionnelle utile (14),
   sinon changer ces critères de grilles d'observation tridimensionnelle (6) dans la base de connaissances (1) et réitérer l'étape d'extraction (A32) des critères de grilles et l'étape concernant la règle d'optimisation de ces nouveaux critères (6).

A titre d'exemple non limitatif, les grilles d'observation tridimensionnelle optimums (5') sont des gilles optimums liées à l'angle du faisceau laser d'illumination et/ou à l'angle du faisceau laser de réception ou à l'angle du faisceau ultrasonore d'excitation et/ou à l'angle de réception ultrasonore, pour lesquelles la reconstruction (D1) est réalisée.

A titre d'exemple non limitatif, les critères de grilles d'observation tridimensionnelle optimums (6') sont des valeurs optimales de l'angle laser d'illumination et/ou de l'angle laser de réception et/ou du pas de l'angle laser d'illumination et/ou du pas de l'angle laser de réception ou des valeurs optimales de l'angle d'excitation ultrasonore et/ou de l'angle de réception ultrasonore et/ou du pas de l'angle d'excitation ultrasonore et/ou du pas de l'angle de réception ultrasonore, pour lesquels la reconstruction (D2) est réalisée.

On décrit à présent la dernière étape de reconstruction (D3),d'une information tridimensionnelle de l'objet (15) à partir de l'information tridimensionnelle utile de l'objet (14). L'information tridimensionnelle de l'objet (15) correspond à la reconstruction tridimensionnelle optimale de l'objet. La fiche d'état de reconnaissance (16) fournit par exemple une information de type « objet non reconstitué » ou « besoin d'enrichir la base de connaissances » ou « travail en différé » ou « non disponibilité du matériel ». Il s'agit finalement d'une fiche de compte-rendu du procédé de reconstruction.

Elle comprend les sous-étapes consistant à :
- extraire (A4), à partir de la base de connaissances (1), les critères de reconstruction tridimensionnelle (7) et la règle d'optimisation associée ;
- si la règle d'optimisation des critères de reconstruction tridimensionnelle (7) issue de la base de connaissances (1), est satisfaite par l'information tridimensionnelle utile de l'objet (14), alors :
   ○ ces critères de reconstruction tridimensionnelle (7) sont des critères de reconstruction tridimensionnelle optimums (7)',
   ○ mettre à jour (E4) la base de connaissances (1) avec lesdits critères de reconstruction tridimensionnelle optimums (7'),
   ○ reconstruire (D3) à partir de l'information tridimensionnelle utile (14) filtrée à travers les critères de reconstruction tridimensionnelle (7), une information tridimensionnelle (15) de l'objet et fournir une fiche d'état de reconnaissance (16),
sinon changer ces critères de reconstruction tridimensionnelle (7) dans la base de connaissances (1) et réitérer l'étape d'extraction (A4) des critères de reconstruction et l'étape concernant la règle d'optimisation de ces nouveaux critères (7).

A titre d'exemple non limitatif, les critères de reconstruction tridimensionnelle optimums (7') sont des valeurs optimales du nombre de facettes, de la taille de chaque facette pour lesquelles la reconstruction tridimensionnelle (D3) est réalisée.

Les étapes (A11), (A12), (A2), (A31), (A32), (A4), (B1), (B2), (B3), (C), (D1), (D2) et (D3) font appel à des techniques de traitement de l'information, de la connaissance, de données, du signal, de l'intelligence artificielle, chaque fonctionnalité étant réalisée par une hybridation spécifique de ces techniques.

Le procédé selon l'invention est particulièrement destiné à la maîtrise des processus d'identification d'objets à intérêt pour le management des risques et des performances dans les domaines suivants : catastrophes naturelles, compétition, environnement, industrie, médical et biotechnologies, nucléaire, pétrole, sécurité, transport (aérien, routier, ferroviaire, maritime)...

## Revendications

1. Procédé de reconstruction synthétique d'un objet exposé à une onde, à partir de signaux captés (8) issus de cette exposition, et d'une base de connaissances (1), **caractérisé en ce que** la base de connaissances comprend différents critères de filtrage à savoir des critères de recherche en mode direct (2), des critères d'extraction de signaux faibles (3), des critères d'identification en mode direct (4), des grilles d'observation tridimensionnelle (5) liées à l'angle d'illumination ou de réception de l'onde, des critères de grilles d'observation tridimensionnelle (6), des critères de reconstruction tridimensionnelle (7), des règles d'optimisation associées aux critères d'identification en mode direct (4), aux grilles d'observation tridimensionnelle (5), aux critères de grilles d'observation tridimensionnelle (6), aux critères de reconstruction tridimensionnelle (7), et des critères optimums correspondants c'est-à-dire respectant lesdites règles d'optimisation, et **en ce que** le procédé comporte les étapes suivantes consistant à :
❖ extraire (A11) de la base de connaissances (1), des critères de recherche en mode direct (2),
❖ extraire (A12) de la base de connaissances (1), des critères d'extraction des signaux faibles (3),
❖ extraire (A2) de la base de connaissances (1), des critères d'identification en mode direct (4) et la règle d'optimisation associée,
❖ extraire (A31) de la base de connaissances (1), des grilles d'observation tridimensionnelle (5) et la règle d'optimisation associée,
❖ extraire (A32) de la base de connaissances (1), des critères de grilles d'observation tridimensionnelle (6) et la règle d'optimisation associée,
❖ extraire (A4) de la base de connaissances (1), des critères de reconstruction tridimensionnelle (7) et la règle d'optimisation associée,
❖ extraire (B1) à partir d'un ensemble de signaux captés (8), filtré à travers les critères de recherche en mode direct extraits (2), des signaux faibles (9),
❖ extraire (B2), à partir des signaux faibles (9) filtrés à travers les critères d'extraction des signaux faibles extraits (3), des signaux faibles à intérêt (10),
❖ débruiter (B3) les signaux faibles à intérêt (10) de manière à obtenir des signaux faibles utiles (11),
❖ si la règle d'optimisation des critères d'identification en mode direct (4) est satisfaite par les signaux faibles utiles (11), alors :
i. les critères d'extraction en mode direct extraits (3) sont des critères d'extraction en mode direct optimums (3'),
ii. mettre à jour (E1) la base de connaissance (1) avec lesdits critères d'extraction en mode direct optimums (3'),
iii. les critères de recherche en mode direct extraits (2) sont des critères de recherche en mode direct optimums (2'),
iv. mettre à jour (E2) la base de connaissance (1) avec lesdits critères de recherche en mode direct optimums (2'),
v. identifier (C) une information directe utile (12), à partir des signaux faibles utiles (11) filtrés à travers les critères d'identification en mode direct (4),
sinon changer ces critères d'extraction des signaux faibles (3) et réitérer l'étape d'extraction (A12) de ces critères (3), les étapes (B2), (B3), et (C) et l'étape concernant la règle d'optimisation du critère (4), et
si la règle d'optimisation des critères d'identification en mode direct (4) n'est pas satisfaite par les signaux faibles utiles (11), alors changer ces critères de recherche en mode direct (2) dans la base de connaissances (1) et réitérer l'étape d'extraction (A11) de ces critères (2), les étapes (B1), (B2), (B3), et (C) et l'étape concernant la règle d'optimisation du critère (4),
❖ si la règle d'optimisation des grilles d'observation tridimensionnelle (5) est satisfaite par l'information directe utile (12), alors :
i. ces grilles d'observation tridimensionnelle extraites (5) sont des grilles d'observation tridimensionnelle optimums (5'),
ii. mettre à jour (E31) dans la base de connaissance (1), les grilles d'observation tridimensionnelle (5) avec ces grilles d'observation tridimensionnelle optimums (5'),
iii. reconstruire (D1) à partir de l'information directe utile (12) filtrée à travers les grilles d'observation tridimensionnelle extraites (5), une information tridimensionnelle à intérêt (13),
sinon changer ces grilles d'observation tridimensionnelle (5) dans la base de connaissances (1), et réitérer l'étape d'extraction (A31) de grilles et l'étape concernant la règle d'optimisation de ces nouvelles grilles (5) ;
❖ si la règle d'optimisation des critères de grilles d'observation tridimensionnelle (6) est satisfaite par l'information tridimensionnelle à intérêt (13), alors :
i. ces critères de grilles d'observation tridimensionnelle extraits (6) sont des critères de grilles d'observation tridimensionnelle optimums (6'),
ii. mettre à jour (E32) dans la base de connaissance (1), les critères de grilles d'observation tridimensionnelle (6) avec ces critères de grilles d'observation tridimensionnelle optimums (6'),
iii. reconstruire (D2) à partir de l'information tridimensionnelle à intérêt (13), filtrée à travers les critères de grilles tridimensionnelle extraits (6), une information tridimensionnelle utile (14),
sinon changer ces critères de grilles d'observation tridimensionnelle (6) dans la base de connaissances (1), et réitérer l'étape d'extraction (A32) des critères de grilles et l'étape concernant la règle d'optimisation de ces nouveaux critères (6),
❖ si la règle d'optimisation des critères de reconstruction tridimensionnelle (7) est satisfaite par l'information tridimensionnelle utile (14), alors :
i. ces critères de reconstruction tridimensionnelle extraits (7) sont des critères de reconstruction tridimensionnelle optimums (7'),
ii. mettre à jour (E4) dans la base de connaissance (1), les critères de reconstruction tridimensionnelle (7) avec ces critères de reconstruction tridimensionnelle optimums (7'),
iii. reconstruire (D3) à partir de l'information tridimensionnelle utile (14), filtrée à travers les critères de reconstruction tridimensionnelle extraits (7), une information tridimensionnelle (15) de l'objet et déterminer (D3) une fiche d'état de reconnaissance (16),
sinon changer ces critères de reconstruction tridimensionnelle (7) dans la base de connaissances (1) et réitérer l'étape d'extraction (A4) des critères de reconstruction et l'étape concernant la règle d'optimisation de ces nouveaux critères (7).

2. Procédé selon la revendication précédente, **caractérisé en ce que** l'étape (B3) comprend en outre une étape d'amplification des signaux débruités.

3. Procédé selon l'une des revendications précédentes, **caractérisé en ce que** l'objet est exposé à une onde électromagnétique.

4. Procédé selon la revendication précédente, **caractérisé en ce que** l'objet est exposé à un faisceau laser dont la longueur d'onde est celle d'un domaine allant du visible à l'infrarouge, ou à des micro-ondes.

5. Procédé selon l'une des revendications précédentes, **caractérisé en ce que** l'objet est exposé à une onde élastique.

6. Procédé selon la revendication précédente, **caractérisé en ce que** l'objet est exposé à une onde élastique dans le domaine des ultrasons ou des sons ou des infrasons.

7. Procédé selon l'une des revendications précédentes, **caractérisé en ce que** les critères de recherches en mode direct (2) sont des critères issus de corrélations d'amplitudes et/ou de corrélations d'intensité diffusée et/ou de séquences temporelles et/ou de densités de probabilité et/ou de signatures spectrales et/ou de corrélations temporelles.

8. Procédé selon l'une des revendications précédentes, **caractérisé en ce que** les critères d'extraction des signaux faibles (3) sont des critères issus d'un seuil et/ou d'une plage et/ou d'un domaine d'évaluation du critère de recherche en mode direct.

9. Procédé selon l'une des revendications précédentes, **caractérisé en ce que** les grilles d'observation tridimensionnelle (5) sont des grilles liées à l'angle du faisceau laser d'illumination et/ou à l'angle du faisceau laser de réception ou à l'angle du faisceau ultrasonore d'excitation et/ou à l'angle de réception ultrasonore.

10. Procédé selon l'une des revendications précédentes, **caractérisé en ce que** les critères de grilles d'observation tridimensionnelle (6) sont des valeurs de l'angle laser d'illumination et/ou de l'angle laser de réception et/ou du pas de l'angle laser d'illumination et/ou du pas de l'angle laser de réception ou des valeurs de l'angle d'excitation ultrasonore et/ou de l'angle de réception ultrasonore et/ou du pas de l'angle d'excitation ultrasonore et/ou du pas de l'angle de réception ultrasonore.

11. Procédé selon l'une des revendications précédentes, **caractérisé en ce que** les critères de reconstruction tridimensionnelle (7) sont des paramètres de forme et/ou de la typologie de facettes et/ou du nombre de facettes et/ou de la taille de facette de l'objet et/ou du comportement de l'objet fournis par une base de données de référence et/ou de connaissances.

12. Procédé selon l'une des revendications précédentes, **caractérisé en ce que** l'information directe utile (12) comprend un sous-ensemble de données du type énergie rétrodiffusée et/ou diffusée correspondant à l'objet extrait des signaux faibles utiles (11).

13. Procédé selon l'une des revendications précédentes, **caractérisé en ce que** l'information tridimensionnelle utile (14) est la reconstruction tridimensionnelle améliorée par l'élimination d'artéfacts.

14. Procédé selon l'une des revendications précédentes, **caractérisé en ce que** l'information tridimensionnelle de l'objet (15) est la reconstruction tridimensionnelle optimale de l'objet.

15. Procédé selon l'une des revendications précédentes, **caractérisé en ce que** la fiche d'état de reconnaissance (16) comprend une information de type « objet non reconstitué » ou « besoin d'enrichir la base de connaissances » ou « travail en différé » ou « non disponibilité du matériel ».

16. Procédé selon l'une des revendications précédentes, **caractérisé en ce que** les règles d'optimisation sont de type recherche de la valeur maxi d'un paramètre, ou d'un comparatif de seuil, ou d'un nombre des coïncidences, ou d'une fenêtre temporelle, ou d'une signature spectrale, ou d'une tache temps-fréquence.

17. Procédé selon l'une des revendications précédentes, **caractérisé en ce que** les signaux faibles sont des signaux pour lesquels le rapport signal/bruit est faible et/ou l'amplitude ou l'intensité est faible et/ou les informations contenues sont fragmentaires et/ou les informations contenues sont constituées de micro-événements en coïncidence ou en occurrence.

## Patentansprüche

1. Verfahren zur synthetischen Rekonstruktion eines unter dem Einfluss einer Welle stehenden Objekts auf der Basis von von dem Einfluss kommenden erfassten Signalen (8) und einer Wissensdatenbank (1), **dadurch gekennzeichnet, dass** die Wissensdatenbank verschiedene Filterungskriterien beinhaltet, nämlich Direktmodus-Suchkriterien (2), Schwachsignal-Extraktionskriterien (3), Direktmodus-Identifikationskriterien (4), dreidimensionale Beobachtungsraster (5), die mit dem Beleuchtungs- oder Empfangswinkel der Welle verknüpft sind, dreidimensionale Beobachtungsrasterkriterien (6), dreidimensionale Rekonstruktionskriterien (7), Optimierungsregeln, die mit den Direktmodus-Identifikationskriterien (4), den dreidimensionalen Beobachtungsrastern (5), den dreidimensionalen Beobachtungsrasterkriterien (6), den dreidimensionalen Rekonstruktionskriterien (7) und entsprechenden optimalen Kriterien assoziiert sind, d.h. solchen, die die Optimierungsregeln erfüllen, und dadurch, dass das Verfahren die folgenden Schritte beinhaltet:
❖ Extrahieren (A11) von Direktmodus-Suchkriterien (2) aus der Wissensdatenbank (1);
❖ Extrahieren (A12) von Schwachsignal-Extraktionskriterien (3) aus der Wissensdatenbank (1);
❖ Extrahieren (A2) von Direktmodus-Identifikationskriterien (4) und der assoziierten Optimierungsregel aus der Wissensdatenbank (1);
❖ Extrahieren (A31) von dreidimensionalen Beobachtungsrastern (5) und der assoziierten Optimierungsregel aus der Wissensdatenbank (1);
❖ Extrahieren (A32) von dreidimensionalen Beobachtungsrasterkriterien (6) und der assoziierten Optimierungsregel aus der Wissensdatenbank (1);
❖ Extrahieren (A4) von dreidimensionalen Rekonstruktionskriterien (7) und der assoziierten Optimierungsregel aus der Wissensdatenbank (1);
❖ Extrahieren (B1) von schwachen Signalen (9) aus einem Satz von erfassten Signalen (8), die durch die extrahierten Direktmodus-Suchkriterien (2) gefiltert wurden;
❖ Extrahieren (B2) von schwachen Signalen von Interesse (10) aus den schwachen Signalen (9), die durch die Extraktionskriterien der extrahierten schwachen Signale (3) gefiltert wurden;
❖ Entfernen von Rauschen (B3) aus den schwachen Signalen von Interesse (10), so dass nützliche schwache Signale (11) erhalten werden;
❖ wenn die Optimierungsregel der Direktmodus-Identifikationskriterien (4) von den nützlichen schwachen Signalen (11) erfüllt wird, dann:
i. sind die extrahierten Direktmodus-Extraktionskriterien (3) optimale Direktmodus-Extraktionskriterien (3');
ii. Aktualisieren (E1) der Wissensdatenbank (1) mit den optimalen Direktmodus-Extraktionskriterien (3');
iii. sind die extrahierten Direktmodus-Suchkriterien (2) optimale Direktmodus-Suchkriterien (2');
iv. Aktualisieren (E2) der Wissensdatenbank (1) mit den optimalen Direktmodus-Suchkriterien (2');
v. Identifizieren (C) einer nützlichen Direktinformation (12) auf der Basis der nützlichen schwachen Signale (11), die durch die Direktmodus-Identifikationskriterien (4) gefiltert wurden;
ansonsten Ändern dieser Kriterien zum Extrahieren der schwachen Signale (3) und Wiederholen von Schritt (A12) des Extrahierens dieser Kriterien (3), der Schritte (B2), (B3) und (C) und des Schrittes in Bezug auf die Optimierungsregel des Kriteriums (4), und
wenn die Optimierungsregel der Direktmodus-Identifikationskriterien (4) durch die nützlichen schwachen Signale (11) nicht erfüllt wird, Ändern dieser Direktmodus-Suchkriterien (2) in der Wissensdatenbank (1) und Wiederholen von Schritt (A11) des Extrahierens dieser Kriterien (2), der Schritte (B1), (B2), (B3) und (C) und des Schrittes in Bezug auf die Optimierungsregel des Kriteriums (4);
❖ wenn die Optimierungsregel der dreidimensionalen Beobachtungsraster (5) durch die nützliche Direktinformation (12) erfüllt wird, dann:
i. sind diese extrahierten dreidimensionalen Beobachtungsraster (5) optimale dreidimensionale Beobachtungsraster (5');
ii. Aktualisieren (E31) der dreidimensionalen Beobachtungsraster (5) in der Wissensdatenbank (1) mit diesen optimalen dreidimensionalen Beobachtungsrastern (5');
iii. Rekonstruieren (D1) einer dreidimensionalen Information von Interesse (13) auf der Basis der nützlichen Direkinformation (12), die durch die extrahierten dreidimensionalen Beobachtungsraster (5) filtriert wurde;
ansonsten Ändern dieser dreidimensionalen Beobachtungsraster (5) in der Wissensdatenbank (1) und Wiederholen des Schrittes (A31) des Extrahierens von Rastern und des Schrittes in Bezug auf die Optimierungsregel dieser neuen Raster (5);
❖ wenn die Optimierungsregel der dreidimensionalen Beobachtungsrasterkriterien (6) durch die dreidimensionale Information von Interesse (13) erfüllt wird, dann:
i. sind diese extrahierten dreidimensionalen Beobachtungsrasterkriterien (6) optimale dreidimensionale Beobachtungsrasterkriterien (6');
ii. Aktualisieren (E32) der dreidimensionalen Beobachtungsrasterkriterien (6) in der Wissensdatenbank (1) mit diesen optimalen dreidimensionalen Beobachtungsrasterkriterien (6');
iii. Rekonstruieren (D2) einer nützlichen dreidimensionalen Information (14) auf der Basis der dreidimensionalen Information von Interesse (13), die durch die extrahierten dreidimensionalen Rasterkriterien (6) gefiltert wurde;
ansonsten Ändern dieser dreidimensionalen Beobachtungsrasterkriterien (6) in der Wissensdatenbank (1) und Wiederholen des Schrittes (A32) des Extrahierens der Rasterkriteren und des Schrittes in Bezug auf die Optimierungsregel dieser neuen Kriterien (6);
❖ wenn die Optimierungsregel der dreidimensionalen Rekonstruktionskriterien (7) durch die nützliche dreidimensionale Information (14) erfüllt wird, dann:
i. sind diese extrahierten dreidimensionalen Rekonstruktionskriterien (7) optimale dreidimensionale Rekonstruktionskriterien (7');
ii. Aktualisieren (E4) der dreidimensionalen Rekonstruktionskriterien (7) in der Wissensdatenbank (1) mit diesen optimalen dreidimensionalen Rekonstruktionskriterien (7');
iii. Rekonstruieren (D3) einer dreidimensionalen Information (15) des Objekts auf der Basis der nützlichen dreidimensionalen Information (14), die durch die extrahierten dreidimensionalen Rekonstruktionskriterien (7) gefiltert wurde, und Ermitteln (D3) einer Erkennungszustandsnotiz (16);
ansonsten Ändern dieser dreidimensionalen Rekonstruktionskriterien (7) in der Wissensdatenbank (1) und Wiederholen des Schrittes (A4) des Extrahierens der Rekonstruktionskriterien und des Schrittes in Bezug auf die Optimierungsregel dieser neuen Kriterien (7).

2. Verfahren nach dem vorherigen Anspruch, **dadurch gekennzeichnet, dass** Schritt (B3) ferner einen Schritt des Verstärkens der rauschfreien Signale beinhaltet.

3. Verfahren nach einem der vorherigen Ansprüche, **dadurch gekennzeichnet, dass** das Objekt unter dem Einfluss einer elektromagnetischen Welle steht.

4. Verfahren nach dem vorherigen Anspruch, **dadurch gekennzeichnet, dass** das Objekt unter dem Einfluss eines Laserstrahls steht, dessen Wellenlänge in einer Domäne liegt, die von sichtbar zu Infrarot oder bis zu Mikrowellen reicht.

5. Verfahren nach einem der vorherigen Ansprüche, **dadurch gekennzeichnet, dass** das Objekt unter dem Einfluss einer elastischen Welle steht.

6. Verfahren nach dem vorherigen Anspruch, **dadurch gekennzeichnet, dass** das Objekt unter dem Einfluss einer elastischen Welle in der Domäne von Ultraschall oder Schall oder Infraschall steht.

7. Verfahren nach einem der vorherigen Ansprüche, **dadurch gekennzeichnet, dass** die Direktmodus-Suchkriterien (2) Kriterien sind, die von Amplitudenkorrelationen und/oder Korrelationen von gestreuter Intensität und/oder Zeitsequenzen und/oder Wahrscheinlichkeitsdichten und/oder Spektralsignaturen und/oder Zeitkorrelationen kommen.

8. Verfahren nach einem der vorherigen Ansprüche, **dadurch gekennzeichnet, dass** die Schwachsignal-Extraktionskriterien (3) Kriterien sind, die von einer Schwelle und/oder einem Bereich und/oder einer Domäne der Beurteilung des Direktmodus-Suchkriteriums kommen.

9. Verfahren nach einem der vorherigen Ansprüche, **dadurch gekennzeichnet, dass** die dreidimensionalen Beobachtungsraster (5) Raster sind, die mit dem Beleuchtungslaserstrahlwinkel und/oder dem Empfangslaserstrahlwinkel oder dem Ultraschallerregungsstrahlwinkel und/oder dem Ultraschallempfangswinkel assoziiert sind.

10. Verfahren nach einem der vorherigen Ansprüche, **dadurch gekennzeichnet, dass** die dreidimensionalen Beobachtungsrasterkriterien (6) Werte des Beleuchtungslaserwinkels und/oder des Empfangslaserwinkels und/oder der Teilung des Beleuchtungslaserwinkels und/oder der Teilung des Empfangslaserwinkels oder Werte des Ultraschallerregungswinkels und/oder des Ultraschallempfangswinkels und/oder der Teilung des Ultraschallerregungswinkels und/oder der Teilung des Ultraschallempfangswinkels sind.

11. Verfahren nach einem der vorherigen Ansprüche, **dadurch gekennzeichnet, dass** die dreidimensionalen Rekonstruktionskriterien (7) Parameter von Form und/oder der Typologie von Facetten und/oder Anzahl von Facetten und/oder der Facettengröße des Objekts und/oder des Verhaltens des Objekts sind, bereitgestellt von einer Referenz- und/oder Wissensdatenbank.

12. Verfahren nach einem der vorherigen Ansprüche, **dadurch gekennzeichnet, dass** die nützliche Direktinformation (12) eine Teilmenge von Daten des Typs rückgestreute und/oder gestreute Energie entsprechend dem aus den nützlichen Schwachsignalen (11) extrahierten Objekts sind.

13. Verfahren nach einem der vorherigen Ansprüche, **dadurch gekennzeichnet, dass** die nützliche dreidimensionale Information (14) die durch die Eliminierung von Artefakten verbesserte dreidimensionale Rekonstruktion ist.

14. Verfahren nach einem der vorherigen Ansprüche, **dadurch gekennzeichnet, dass** die dreidimensionale Information des Objekts (15) die optimale dreidimensionale Rekonstruktion des Objekts ist.

15. Verfahren nach einem der vorherigen Ansprüche, **dadurch gekennzeichnet, dass** die Erkennungsstatusnotiz (16) eine Information des Typs "Objekt nicht rekonstituiert" oder "Wissendatenbank erweiterungsbedürftig" oder "Arbeit verschoben" oder "Hardware nicht verfügbar" beinhaltet.

16. Verfahren nach einem der vorherigen Ansprüche, **dadurch gekennzeichnet, dass** die Optimierungsregeln vom Typ Suche nach dem Höchstwert eines Parameters oder nach einem Schwellenwertvergleich oder nach einer Anzahl von Koinzidenzfällen oder nach einem Zeitfenster oder nach einer Spektralsignatur oder nach einem Zeit-Frequenz-Punkt sind.

17. Verfahren nach einem der vorherigen Ansprüche, **dadurch gekennzeichnet, dass** die Schwachsignale Signale sind, für die das Signal-Rausch-Verhältnis schwach ist und/oder die Amplitude oder Intensität schwach ist und/oder die enthaltenen Informationen bruchstückartig sind und/oder die enthaltenen Informationen aus Koinzidenz- oder Auftretens-Mikroereignissen bestehen.

## Claims

1. A method for the synthetic reconstruction of an object exposed to a wave on the basis of captured signals (8) coming from said exposition and of a knowledge base (1), **characterised in that** said knowledge base comprises various filtering criteria, namely direct mode search criteria (2), weak signal extraction criteria (3), direct mode identification criteria (4), three-dimensional observation grids (5) linked to the angle of illumination or reception of the wave, three-dimensional observation grid criteria (6), three-dimensional reconstruction criteria (7), optimisation rules associated with the direct mode identification criteria (4), the three-dimensional observation grids (5), the three-dimensional observation grid criteria (6), the three-dimensional reconstruction criteria (7), and corresponding optimum criteria, i.e. which comply with said optimisation rules, and **in that** said method comprises the following steps that consist in:
❖ extracting (A11) direct mode search criteria (2) from said knowledge base (1);
❖ extracting (A12) weak signal extraction criteria (3) from said knowledge base (1);
❖ extracting (A2) direct mode identification criteria (4) and the associated optimisation rule from said knowledge base (1);
❖ extracting (A31) three-dimensional observation grids (5) and the associated optimisation rule from said knowledge base (1);
❖ extracting (A32) three-dimensional observation grid criteria (6) and the associated optimisation rule from said knowledge base (1);
❖ extracting (A4) three-dimensional reconstruction criteria (7) and the associated optimisation rule from said knowledge base (1);
❖ extracting (B1) weak signals (9) from a set of captured signals (8) filtered through the extracted direct mode search criteria (2);
❖ extracting (B2) weak signals of interest (10) from the weak signals (9) filtered through the extraction criteria of the extracted weak signals (3);
❖ removing noise (B3) from the weak signals of interest (10) so as to obtain useful weak signals (11);
❖ if the optimisation rule of the direct mode identification criteria (4) is fulfilled by the useful weak signals (11), then:
i. the extracted direct mode extraction criteria (3) are optimum direct mode extraction criteria (3');
ii. update (E1) said knowledge base (1) with said optimum direct mode extraction criteria (3');
iii. the extracted direct mode search criteria (2) are optimum direct mode search criteria (2');
iv. update (E2) said knowledge base (1) with said optimum direct mode search criteria (2');
v. identify (C) useful direct information (12) on the basis of the useful weak signals (11) filtered through the direct mode identification criteria (4);
otherwise change these criteria for extracting the weak signals (3) and repeat step (A12) of extracting these criteria (3), steps (B2), (B3) and (C) and the step relating to the optimisation rule of the criterion (4), and
if the optimisation rule of the direct mode identification criteria (4) is not satisfied by the useful weak signals (11), then change these direct mode search criteria (2) in said knowledge base (1) and repeat step (A11) of extracting said criteria (2), steps (B1), (B2), (B3) and (C) and the step relating to the optimisation rule of the criterion (4);
❖ if the optimisation rule of the three-dimensional observation grids (5) is satisfied by the useful direct information (12), then:
i. these extracted three-dimensional observation grids (5) are optimum three-dimensional observation grids (5');
ii. update (E31) the three-dimensional observation grids (5) in said knowledge base (1) with these optimum three-dimensional observation grids (5');
iii. reconstruct (D1) three-dimensional information of interest (13) on the basis of the useful direct information (12) filtered through the extracted three-dimensional observation grids (5);
otherwise change these three-dimensional observation grids (5) in said knowledge base (1) and repeat step (A31) of extracting grids and the step relating to the optimisation rule of these new grids (5);
❖ if the optimisation rule of the three-dimensional observation grid criteria (6) is satisfied by the three-dimensional information of interest (13), then:
i. these extracted three-dimensional observation grid criteria (6) are optimum three-dimensional observation grid criteria (6');
ii. update (E32) the three-dimensional observation grid criteria (6) in said knowledge base (1) with said optimum three-dimensional observation grid criteria (6');
iii. reconstruct (D2) useful three-dimensional information (14) on the basis of the three-dimensional information of interest (13) filtered through the extracted three-dimensional grid criteria (6);
otherwise change these three-dimensional observation grid criteria (6) in the knowledge base (1) and repeat step (A32) of extracting the grid criteria and the step relating to the optimisation rule of these new grids (6);
❖ if the optimisation rule of the three-dimensional reconstruction criteria (7) is satisfied by the useful three-dimensional information (14), then:
i. these extracted three-dimensional reconstruction criteria (7) are optimum three-dimensional reconstruction criteria (7');
ii. update (E4) the three-dimensional reconstruction criteria (7) in said knowledge base (1) with said optimum three-dimensional reconstruction criteria (7');
iii. reconstruct (D3) three-dimensional information (15) of the object on the basis of the useful three-dimensional information (14) filtered through the extracted three-dimensional reconstruction criteria (7) and determine (D3) a recognition state note (16);
otherwise change said three-dimensional reconstruction criteria (7) in said knowledge base (1) and repeat step (A4) of extracting the reconstruction criteria and the step relating to the optimisation rule of these new criteria (7).

2. The method according to the preceding claim, **characterised in that** step (B3) further comprises a step of amplifying the noise free signals.

3. The method according to any one of the preceding claims, **characterised in that** the object is exposed to an electromagnetic wave.

4. The method according to the preceding claim, **characterised in that** the object is exposed to a laser beam, the wavelength of which is within a domain passing from visible to infrared or to microwaves.

5. The method according to any one of the preceding claims, **characterised in that** the object is exposed to an elastic wave.

6. The method according to the preceding claim, **characterised in that** the object is exposed to an elastic wave in the domain of ultrasound or sounds or infra-sounds.

7. The method according to any one of the preceding claims, **characterised in that** the direct mode search criteria (2) are criteria coming from correlations of amplitudes and/or correlations of broadcast intensity and/or time sequences and/or probability densities and/or spectral signatures and/or time correlations.

8. The method according to any one of the preceding claims, **characterised in that** the weak signal extraction criteria (3) are criteria coming from a threshold and/or a range and/or a domain of assessing the direct mode search criterion.

9. The method according to any one of the preceding claims, **characterised in that** the three-dimensional observation grids (5) are grids associated with the illumination laser beam angle and/or the reception laser beam angle or the ultrasound excitation beam angle and/or the ultrasound reception angle.

10. The method according to any one of the preceding claims, **characterised in that** the three-dimensional observation grid criteria (6) are values of the illumination laser angle and/or the reception laser angle and/or the pitch of the illumination laser angle and/or the pitch of the reception laser angle or values of the ultrasound excitation angle and/or of the ultrasound reception angle and/or of the pitch of the ultrasound excitation angle and/or of the pitch of the ultrasound reception angle.

11. The method according to any one of the preceding claims, **characterised in that** the three-dimensional reconstruction criteria (7) are parameters of shape and/or typology of facets and/or number of facets and/or the facet size of the object and/or of the behaviour of the object provided by a reference database and/or knowledge base.

12. The method according to any one of the preceding claims, **characterised in that** the useful direct information (12) comprises a sub-set of data of the backscattered and/or scattered energy type corresponding to the object extracted from the useful weak signals (11).

13. The method according to any one of the preceding claims, **characterised in that** the useful three-dimensional information (14) is the three-dimensional reconstruction enhanced by the elimination of artefacts.

14. The method according to any one of the preceding claims, **characterised in that** the three-dimensional information of the object (15) is the optimal three-dimensional reconstruction of the object.

15. The method according to any one of the preceding claims, **characterised in that** the recognition status note (16) comprises information of the "object not reconstituted" or "knowledge base requires enhancing" or "work deferred" or "non-availability of the hardware" type.

16. The method according to any one of the preceding claims, **characterised in that** the optimisation rules are of the type for searching for the maximum value of a parameter or for a threshold comparison or for a number of coincidences or for a time window or for a spectral signature or for a time frequency spot.

17. The method according to any one of the preceding claims, **characterised in that** the weak signals are signals for which the signal-to-noise ratio is weak and/or the amplitude or the intensity is weak and/or the information contained is fragmental and/or the information contained is constituted by micro-events in coincidence or in occurrence.
